# FASCICULE DE BREVET EUROPEEN

(11) **EP 2 956 332 B1**
(45) Date de publication et mention de la délivrance du brevet: **01.02.2017**
(21) Numéro de dépôt: 14708623.5
(22) Date de dépôt: 12.02.2014
(51) Int. Cl.: B60N 2/015, B60N 2/30, B62D 65/14

(54) **ARRIMAGE DE SIEGE AMOVIBLE ET ESCAMOTABLE A UN PLANCHER DE VEHICULE**
BEFESTIGUNG EINES ABNEHMBAREN UND FALTBAREN SITZES AN EINEM FAHRZEUGBODEN
ACHORAGE OF A REMOVABLE AND FOLDABLE SEAT ON A VEHICLE FLOOR PANEL

(30) Priorité: 13.02.2013 FR 1351216
(43) Date de publication de la demande: 23.12.2015
(73) Titulaire: Peugeot Citroën Automobiles SA, 78140 Vélizy Villacoublay (FR)
(72) Inventeur: TRANNOY, Marc, F-78370 Plaisir (FR); PINTO TEIXEIRA, Frederic, F-91160 Ballainvilliers (FR); DUTOT, Christophe, F-94400 Vitry Sur Seine (FR)
(86) Numéro de dépôt international: PCT/FR2014/050270
(87) Numéro de publication internationale: WO 2014/125209

(56) Documents cités:
- EP-A1- 0 468 761
- EP-A1- 2 184 201
- FR-A5- 2 079 920
- US-A1- 2001 026 075

## Description

L'invention a trait à l'arrimage de siège amovible et/ou escamotable à un plancher de véhicule. Plus particulièrement, l'invention a trait à un plancher de véhicule pourvu de moyens d'arrimage. L'invention a trait également à un véhicule comprenant un tel plancher.

Divers dispositifs d'arrimage pour sièges amovibles sont connus, notamment des documents de brevet FR 2 780 351 B1, FR 2 783 470 B1 et US 4,759,580. Ces dispositifs comprennent essentiellement des moyens à crochet(s) coopérant avec des axes ou tourillons fixés au plancher du véhicule.

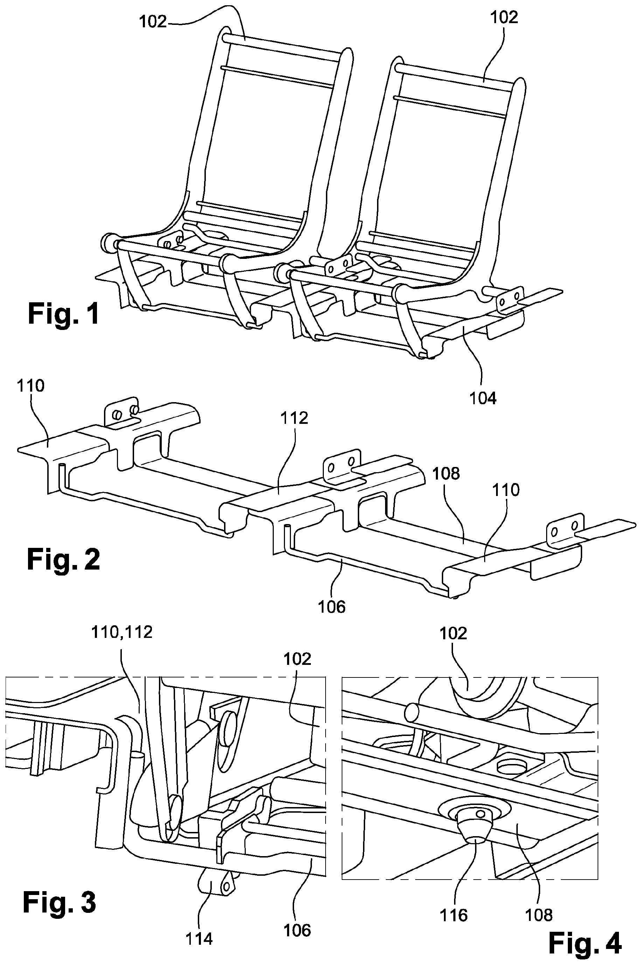

Les figures 1 à 4 divulguent un mode de fixation de sièges conforme à l'état de la technique. Il s'agit de deux sièges d'appoint 102 (voir figure 1) formant un troisième rang et disposés dans la partie coffre à bagage du véhicule. Ces sièges sont arrimés au plancher du véhicule au moyen d'un support 104 fixé au plancher du véhicule. Ce support 104 est davantage illustré à la figure 2 où on peut observer qu'il est configuré pour épouser un plancher comportant deux cuvettes disposées côte à côte suivant une direction latérale du véhicule. En effet, le support 104 comprend deux longerons latéraux 110 de sections généralement en L et opposées, ainsi qu'un longeron central 112 de section généralement en U inversé. Deux tiges 106 sous forme de fil métallique sont disposées transversalement entre des zones avant inférieures des portions verticales des longerons latéraux 110 et du longeron central 112, respectivement. Deux plats 108 sont disposés, également transversalement, entre des zones arrière inférieures des portions verticales des longerons 110 et 112. Ces tiges 106 et plats 108 sont destinés à occuper le fond des cuvettes du plancher (non représenté) et à servir de moyens d'arrimage des sièges 102, ces sièges étant escamotables dans le volume des cuvettes. La figure 3 illustre la liaison entre une partie avant d'un des sièges 102 et une des tiges 106, et ce au moyen d'un verrou 114 formant une encoche destinée à recevoir la tige 106 et pourvue d'un crochet mobile apte à coopérer avec ladite tige en vue de la verrouiller dans l'encoche. La figure 4 illustre la liaison entre une partie arrière d'un des sièges 102 et un des plats 108. Un pion 116 pourvu de billes mobiles sur sa surface latérale coopère par insertion avec un orifice correspondant dans le plat 108, les billes assurant le verrouillage du pion dans l'orifice. Les billes peuvent être commandées par une tige coulissant à l'intérieur du pion suivant sa direction longitudinale.

Le dispositif illustré aux figures 1 à 4 présente l'avantage que les sièges sont escamotables et de plus amovibles. Cela permet ainsi que pouvoir les enlever lorsque le volume des cuvettes est nécessaire ou encore lorsque l'on désirer alléger le véhicule. Ce dispositif présente cependant l'inconvénient que le support (illustré à la figure 2, référence 104) est un armature lourde et coûteuse à réaliser.

De plus, le document EP 0 468 761 A1 montre un plancher de véhicule pour un siège amovible et escamotable selon le préambule de la revendication 1.

L'invention a pour objectif de proposer une solution palliant au moins un des inconvénients présentés par l'état de la technique susmentionné. Plus précisément, l'invention a pour objectif de proposer une solution au problème de fixation de sièges escamotables et amovibles, qui soit légère et économique.

L'invention a pour objet un plancher de véhicule comprenant au moins une cuvette avec deux parois latérales et pourvue de moyens d'arrimage d'un siège amovible et escamotable dans ladite cuvette; remarquable en ce que les moyens d'arrimage comprennent plusieurs tourillons encastrés dans les parois latérales de la cuvette. Chaque cuvette peut comprendre au moins deux tourillons, préférentiellement quatre tourillons, en vis-à-vis sur les parois latérales opposées. Le plancher comprend préférentiellement deux cuvettes disposées côte-à-côte suivant une direction transversale au véhicule.

Selon un mode avantageux de l'invention, les tourillons sont disposés en vis-à-vis suivant une direction transversale du véhicule.

Selon un mode avantageux de l'invention, chacun des tourillons comprend un filetage, préférentiellement mâle, coopérant avec un filetage correspondant sur un renfort de la paroi latérale correspondante.

Selon un mode avantageux de l'invention, chacun des tourillons comprend une gorge, les tourillons étant préférentiellement en forme de diabolo.

Selon un mode avantageux de l'invention, les deux parois latérales sont renforcées aux emplacements des tourillons par une ou plusieurs tôles s'étendant sur la face intérieure de la paroi, opposée à la cuvette, jusqu'à une portion généralement horizontale du plancher de manière à former un angle.

Selon un mode avantageux de l'invention, les deux parois latérales comportent un orifice pour chaque tourillon, la tôle de renforcement correspondante comprenant un filetage femelle apte à coopérer avec un filetage mâle dudit tourillon.

Selon un mode avantageux de l'invention, chacune des deux parois latérales comprend deux tourillons alignés transversalement avec les tourillons de l'autre desdites parois.

Selon un mode avantageux de l'invention, le plancher comprend deux cuvettes disposées côte à côte suivant une direction latérale au véhicule, chacune desdites cuvettes étant pourvue des moyens d'arrimage.

Selon un mode avantageux de l'invention, le plancher comprend une portion centrale entre les deux cuvettes, en forme de tunnel, ladite portion centrale comprenant au moins une tôle de renfort en forme de tunnel épousant les faces intérieures de ladite portion.

L'invention a également pour objet un véhicule automobile comprenant un plancher, remarquable en ce que le plancher est conforme à l'invention, la ou les cuvettes correspondant à une troisième rangée de siège en partant de l'avant.

Les mesures de l'invention sont intéressantes en ce qu'elles permettent de s'acquitter d'un support à armatures complexe, coûteux et lourd. Les renforts optionnels au niveau des parois latérales des cuvettes peuvent être optimisés en épousant les portions coudées avoisinantes des tourillons et être ainsi limités en taille et en poids. De plus, en laissant l'espace central de la cuvette totalement libre, les mesures de l'invention confèrent ainsi davantage de liberté pour y loger le siège.

D'autres caractéristiques et avantages de la présente invention seront mieux compris à l'aide de la description et des dessins parmi lesquels :
- La figure 1 est une illustration de deux sièges amovibles et escamotables de troisième rang d'un véhicule sur leur support de fixation, selon l'état de la technique ;
- La figure 2 est une illustration du support de fixation des sièges de la figure 1 ;
- La figure 3 est une vue de détail de la fixation entre un des sièges de la figure 1 et son support ;
- La figure 4 est une autre vue de détail de la fixation entre un des sièges de la figure 1 et son support ;
- La figure 5 est une illustration d'un plancher de véhicule conforme à l'invention ;
- La figure 6 est une vue en coupe VI-VI de la figure 5 ;
- La figure 7 est une vue en coupe VII-VII de la figure 5 ;
- La figure 8 est une vue de côté d'un siège apte à engager avec les moyens d'arrimage du plancher de la figure 5.

Les figures 1 à 4 ont été décrites précédemment dans la partie relative à l'état de la technique. Elles ne seront donc pas décrites à nouveau.

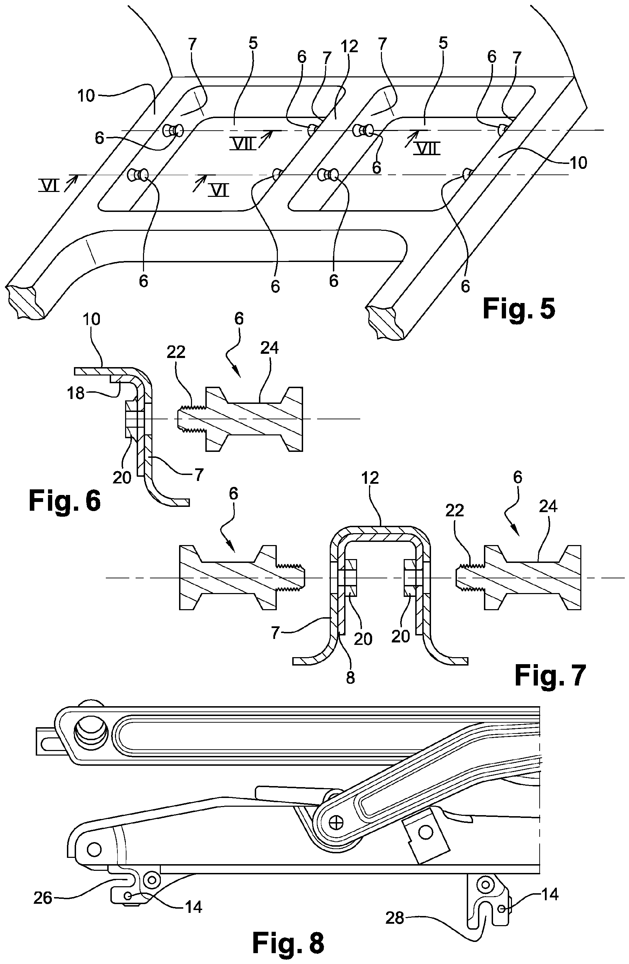

La figure 5 illustre un plancher de véhicule, conforme à l'invention. Le plancher 4 correspond préférentiellement à une portion arrière du véhicule, plus précisément au coffre à bagage pouvant occasionnellement servir de troisième rangée de sièges dans le véhicule. Le plancher 4 comprend deux cuvettes 5 disposées côte à côte selon une direction transversale au véhicule, chacune de ces cuvettes 5 étant destinée à recevoir un siège escamotable et/ou amovible. Les cuvettes 5 sont formées par des emboutis de tôle formant deux longerons latéraux 10 et un longeron central 12. Ces longerons forment les parois latérales 7 des cuvettes auxquelles sont fixés des tourillons 6 servant de moyens d'arrimage des sièges.

Chaque cuvette 5 comprend quatre tourillons, dont deux sont disposés sur chacune des parois latérales 7. Les tourillons sont préférentiellement disposés de manière à être alignés deux à deux transversalement.

La figure 6 est une vue en coupe VI-VI de la figure 1, étant entendu que cette illustration vaut également pour les autres tourillons fixés aux longerons latéraux 10. On peut observer que la paroi latérale 7 comprend un orifice destiné à recevoir la partie mâle filetée 22 du tourillon 6. Elle comprend également sur sa face intérieure, c'est-à-dire sa face opposée à celle regardant vers la cuvette, une tôle de renfort 18. Cette dernière s'étend le long de la face intérieure de la paroi latérale 7 jusqu'à la face intérieure de la paroi généralement horizontale directement adjacente à la paroi latérale 7, de manière à épouser une portion coudée du longeron 10 à proximité du trou de fixation du tourillon 6. La tôle de renfort comprend un écrou 20 rapporté, soudé ou formé dans la masse de ladite tôle, destiné à coopérer avec le filetage mâle 22 du tourillon 6.

La tôle de renfort 18 peut être collée, soudée, vissée ou encore une combinaison de ces trois solutions, au longeron latéral 10.

Le tourillon 6 présente une forme générale de diabolo avec une gorge 24 apte à servir d'arrimage du siège. Le tourillon est préférentiellement en matériau métallique. Sa taille et les détails de sa forme peuvent varier et dépendre notamment des moyens de fixation du siège. Ils constituent des éléments courts, préférentiellement de longueur utile inférieure à 100mm, préférentiellement 70mm, de manière à limiter les efforts de flexion au niveau de l'encastrement réalisé par le filetage 22 avec l'écrou 20. La face frontale du tourillon peut présenter des moyens d'engagement en rotation avec un outil de serrage, ces moyens pouvant être un six-pans creux.

La figure 7 est une vue en coupe VII-VII de la figure 5, étant entendu qu'elle vaut également pour les deux tourillons disposés à l'avant, de part et d'autre, du même longeron central 12 (figure 5). On peut observer à la figure 5 que le longeron central 12, en forme de tunnel, comprend deux orifices opposés et alignés, destinés à recevoir les parties mâles filetées 22 des tourillons respectifs 6. Une tôle de renfort 8 est disposée sur la face intérieure du longeron central 12, s'étendant depuis une des parois latérales 7 jusqu'à l'autre des parois latérales en passant par la paroi généralement horizontale. La tôle de renfort 8 épouse ainsi deux portions coudées du longeron et assure ainsi un renfort optimal. La tôle de renfort comprend un écrou 20 rapporté ou formé dans la masse de ladite tôle, destiné à coopérer avec le filetage mâle 22 du tourillon 6.

La tôle de renfort 8 peut être collée, soudée, vissée ou encore une combinaison de ces trois solutions, au longeron central 12.

Les remarques ci-dessus relatives à la forme et au matériau du tourillon de la figure 6 s'appliquent également aux tourillons sur le longeron central.

Les tôles de renfort 8 et 18 du longeron central et des longerons latéraux, respectivement, peuvent s'étendre localement au niveau des emplacements des tourillons ou encore s'étendre longitudinalement depuis l'emplacement du tourillon avant jusqu'à l'emplacement du tourillon arrière correspondant.

La figure 8 illustre une portion de siège 2 escamotable dans le volume de la cuvette, et amovible. Le siège comprend des moyens de fixation 14 à l'avant et à l'arrière, aptes à coopérer avec les tourillons 6 correspondants. Plus précisément, ces moyens de fixation 14 forment, chacun, une encoche 26, 28, apte à recevoir la gorge du tourillon (voir figures 6 et 7, référence 24) et un verrou mobile, préférentiellement en rotation, et apte à fermer au moins partiellement l'ouverture de l'encoche de manière à y verrouiller le tourillon. Les moyens de fixation avant 14 (à gauche sur la figure 8) comprennent, chacun, une encoche 26 dont l'ouverture est généralement dirigée vers l'avant, alors que les moyens de fixation arrière 14 (à droite sur la figure 8) comprennent, chacun, une encoche 26 dont l'ouverture 28 est dirigée généralement vers le bas. Les directions des ouvertures 26 et 28 forment ainsi un angle généralement égal ou supérieur à 90°. Le siège 2 peut ainsi être mis en place par un mouvement majoritairement longitudinal vers l'avant de manière à engager les encoches avant 26 avec les deux tourillons avant correspondants, et ensuite un mouvement majoritairement vertical vers le bas, correspondant en fait à un pivotement par rapport à l'axe des tourillons avant, de manière à engager les encoches arrière 28 avec les tourillons arrière correspondants.

## Revendications

1. Plancher (4) de véhicule comprenant au moins une cuvette (5) avec deux parois latérales (7) et pourvue de moyens d'arrimage d'un siège amovible et escamotable (2) dans ladite cuvette ;
**caractérisé en ce que**
les moyens d'arrimage comprennent plusieurs tourillons (6) encastrés dans les parois latérales (7) de la cuvette (5).

2. Plancher (4) de véhicule selon la revendication 1, **caractérisé en ce que** les tourillons (6) sont disposés en vis-à-vis suivant une direction transversale du véhicule.

3. Plancher (4) de véhicule selon l'une des revendications 1 et 2, **caractérisé en ce que** chacun des tourillons (6) comprend un filetage (22), préférentiellement mâle, coopérant avec un filetage correspondant (20) sur un renfort (8, 18) de la paroi latérale correspondante (7).

4. Plancher (4) de véhicule selon l'une des revendications 1 à 3, **caractérisé en ce que** chacun des tourillons (6) comprend une gorge (24), les tourillons étant préférentiellement en forme de diabolo.

5. Plancher (4) de véhicule selon l'une des revendications 1 à 4, **caractérisé en ce que** les deux parois latérales (7) sont renforcées aux emplacements des tourillons (6) par une ou plusieurs tôles (8, 18) s'étendant sur la face intérieure de la paroi, opposées à la cuvette, jusqu'à une portion généralement horizontale du plancher de manière à former un angle.

6. Plancher (4) de véhicule selon la revendication 5, **caractérisé en ce que** les deux parois latérales (7) comportent un orifice pour chaque tourillon (6), la tôle de renforcement correspondante (8, 18) comprenant un filetage femelle (20) apte à coopérer avec un filetage mâle (22) dudit tourillon (6).

7. Plancher (4) de véhicule selon l'une des revendications 1 à 6, **caractérisé en ce que** chacune des deux parois latérales (7) comprend deux tourillons (6) alignés transversalement avec les tourillons de l'autre desdites parois.

8. Plancher (4) de véhicule selon l'une des revendications 1 à 7, **caractérisé en ce qu'**il comprend deux cuvettes (5) disposées côte à côte suivant une direction latérale au véhicule, chacune desdits cuvettes (5) étant pourvue des moyens d'arrimage (6).

9. Plancher (4) de véhicule selon la revendication 8, **caractérisé en ce qu'**il comprend une portion centrale (12) entre les deux cuvettes (5), en forme de tunnel, ladite portion centrale (12) comprenant au moins une tôle de renfort (8) en forme de tunnel épousant les faces intérieures de ladite portion.

10. Véhicule automobile comprenant un plancher, **caractérisé en ce que** le plancher (4) est conforme à l'une des revendications 1 à 9, la ou les cuvettes (5) correspondant à une troisième rangée de siège en partant de l'avant.

## Patentansprüche

1. Fahrzeugboden (4), der mindestens eine Wanne (5) mit zwei Seitenwänden (7) umfasst und mit Mitteln zum Befestigen eines abnehmbaren und faltbaren Sitzes (2) in der Wanne versehen ist,
**dadurch gekennzeichnet, dass**
die Befestigungsmittel mehrere Zapfen (6) umfassen, die in die Seitenwände (7) der Wanne (5) eingelassen sind.

2. Fahrzeugboden (4) nach Anspruch 1, **dadurch gekennzeichnet, dass** die Zapfen (6) in Gegenüberlage entlang einer Querrichtung des Fahrzeugs angeordnet sind.

3. Fahrzeugboden (4) nach einem der Ansprüche 1 und 2, **dadurch gekennzeichnet, dass** jeder der Zapfen (6) ein Gewinde (22) umfasst, bevorzugt ein Außengewinde, das mit einem entsprechenden Gewinde (20) auf einer Verstärkung (8, 18) der entsprechenden Seitenwand (7) zusammenwirkt.

4. Fahrzeugboden (4) nach einem der Ansprüche 1 bis 3, **dadurch gekennzeichnet, dass** jeder der Zapfen (6) eine Hohlkehle (24) umfasst, wobei die Zapfen bevorzugt Doppelkegelrollenform haben.

5. Fahrzeugboden (4) nach einem der Ansprüche 1 bis 4, **dadurch gekennzeichnet, dass** die zwei Seitenwände (7) an den Stellen der Zapfen (6) durch ein oder mehrere Bleche (8, 18), die sich auf der Innenseite der Wand erstrecken, die der Wanne entgegengesetzt sind, bis zu einem allgemein horizontalen Abschnitt des Bodens verstärkt sind, so dass ein Winkel gebildet wird.

6. Fahrzeugboden (4) nach Anspruch 5, **dadurch gekennzeichnet, dass** die zwei Seitenwände (7) eine Öffnung für jeden Zapfen (6) umfassen, wobei das entsprechende Verstärkungsblech (8, 18) ein Innengewinde (20) umfasst, das geeignet ist, um mit einem Außengewinde (22) des Zapfens (6) zusammenzuwirken.

7. Fahrzeugboden (4) nach einem der Ansprüche 1 bis 6, **dadurch gekennzeichnet, dass** jede der zwei Seitenwände (7) zwei Zapfen (6) umfasst, die quer zu den Zapfen der anderen der Wände ausgerichtet sind.

8. Fahrzeugboden (4) nach einem der Ansprüche 1 bis 7, **dadurch gekennzeichnet, dass** er zwei Wannen (5) aufweist, die nebeneinander entlang einer seitlichen Richtung des Fahrzeugs angeordnet sind, wobei jede der Wannen (5) mit Befestigungsmitteln (6) versehen ist.

9. Fahrzeugboden (4) nach Anspruch 8, **dadurch gekennzeichnet, dass** er einen zentralen Abschnitt (12) zwischen den zwei Wannen (5) in Tunnelform umfasst, wobei der zentrale Abschnitt (12) mindestens ein Verstärkungsblech (8) in Tunnelform, das sich an die Innenseiten des Abschnitts schmiegt, umfasst.

10. Kraftfahrzeug, das einen Boden umfasst, **dadurch gekennzeichnet, dass** der Boden (4) einem der Ansprüche 1 bis 9 entspricht, wobei die Wanne oder die Wannen (5) einer dritten Sitzreihe ausgehend von der Vorderseite entsprechen.

## Claims

1. A floor (4) of a vehicle including at least one pan (5) with two lateral walls (7) and provided with anchorage means of a removable and foldable seat (2) in said pan;
**characterized in that**
the anchorage means include a plurality of journals (6) embedded in the lateral walls (7) of the pan (5).

2. The floor (4) of a vehicle according to Claim 1, **characterized in that** the journals (6) are disposed in a facing arrangement along a transverse direction of the vehicle.

3. The floor (4) of a vehicle according to one of Claims 1 and 2, **characterized in that** each of the journals (6) includes a thread (22), preferably male, cooperating with a corresponding thread (20) on a reinforcement (8, 18) of the corresponding lateral wall (7).

4. The floor (4) of a vehicle according to one of Claims 1 to 3, **characterized in that** each of the journals (6) includes a groove (24), the journals being preferably in the form of a diabolo.

5. The floor (4) of a vehicle according to one of Claims 1 to 4, **characterized in that** the two lateral walls (7) are reinforced at the locations of the journals (6) by one or more metal plates (8, 18) extending on the interior face of the wall, opposite the pan, up to a generally horizontal portion of the floor so as to form an angle.

6. The floor (4) of a vehicle according to Claim 5, **characterized in that** the two lateral walls (7) comprise an orifice for each journal (6), the corresponding reinforcement metal plate (8, 18) including a female thread (20) able to cooperate with a male thread (22) of said journal (6).

7. The floor (4) of a vehicle according to one of Claims 1 to 6, **characterized in that** each of the two lateral walls (7) includes two journals (6) aligned transversely with the journals of the other of said walls.

8. The floor (4) of a vehicle according to one of Claims 1 to 7, **characterized in that** it includes two pans (5) disposed side by side along a lateral direction to the vehicle, each of said pans (5) being provided with anchorage means (6).

9. The floor (4) of a vehicle according to Claim 8, **characterized in that** it includes a central portion (12) between the two pans (5), in the form of a tunnel, said central portion (12) including at least one reinforcement metal plate (8) in the form of a tunnel fitting the interior faces of said portion.

10. A motor vehicle including a floor, **characterized in that** the floor (4) is in accordance with one of Claims 1 to 9, the pan or pans (5) corresponding to a third seat row starting from the front.
